# FASCICULE DE BREVET EUROPEEN

(11) **EP 2 878 855 B1**
(45) Date de publication et mention de la délivrance du brevet: **23.12.2020**
(21) Numéro de dépôt: 14191875.5
(22) Date de dépôt: 05.11.2014
(51) Int. Cl.: F16G 15/06, F16G 15/08, F16B 45/04

(54) **DISPOSITIF D'ATTACHE À ÉMERILLON OUVRABLE PERFECTIONNÉ**
ANSCHLUSSVORRICHTUNG MIT PERFEKTIONIERTEM ÖFFENBAREM WIRBEL
IMPROVED OPENABLE SWIVELLING FASTENING DEVICE

(30) Priorité: 27.11.2013 FR 1302746
(43) Date de publication de la demande: 03.06.2015
(73) Titulaire: Zedel, 38920 Crolles (FR)
(72) Inventeur: Maurice, Alain, 38660 Saint Hilaire du Touvet (FR); Quillard, Christophe, 38320 Eybens (FR)
(74) Mandataire: Talbot, Alexandre

(56) Documents cités:
- FR-A- 397 596
- FR-A1- 2 950 122
- GB-A- 191 501 771
- US-A- 1 645 714
- US-A- 5 634 246
- US-A1- 2009 208 274
- US-A1- 2011 247 183
- US-A1- 2012 017 405

## Description

### Domaine technique de l'invention

L'invention est relative à un dispositif d'attache à émerillon comprenant une paire d'anneaux pouvant tourner librement l'un par rapport à l'autre autour d'un axe de rotation défini par un pivot central, au moins l'un des anneaux étant conformé en crochet délimitant un espace d'accès latéral.

### État de la technique

Un émerillon connu du genre mentionné, comporte deux anneaux rotatifs autour d'un pivot central, dans le lequel chaque anneau est constitué par l'assemblage bout à bout des extrémités de deux parties en U. Deux vis sont nécessaires pour fermer chaque anneau. En position assemblée de l'anneau, les deux vis sont noyées dans le corps de l'anneau, et ne sont pas visibles depuis l'extérieur. En cas de fermeture incomplète avec une seule vis, ou de vissage insuffisant, l'état visible de l'anneau paraît normal, mais au détriment de sa résistance mécanique.

Le document GB 191501717 décrit un système d'attache comprenant un étrier en U pour l'accrochage d'un crochet à œil, et un boulon à œil, lequel traverse un trou ménagé dans un pont rectiligne vissé aux extrémités filetées de l'étrier par des vis. Un ressort de compression est intercalé entre le pont qui est réglable en fonction du degré de vissage des vis, et une butée fixe. Une telle configuration du système d'attache ne permet pas d'ouvrir facilement l'étrier en U, notamment pour l'accrochage d'une sangle de liaison.

D'autres produits d'attache connus concernent des manilles (voir FR 2950122) pouvant tourner autour d'un anneau fermé. L'encombrement de ces dispositifs est important, et peu pratique à utiliser. Si la manille n'est pas bien adaptée à la charge, l'effort de traction peut s'appliquer sur le bord de la manille et n'est donc pas centré sur l'axe de rotation de l'émerillon.

A la place des manilles, il existe également des mousquetons accouplés à rotation à un anneau par un pivot. Les mousquetons possèdent des doigts pivotants à fermeture automatique pouvant être verrouillée. L'encombrement important ne facilité pas les manipulations, et la reprise de charge par le doigt fermé est insuffisante. Un tel système à émerillon est décrit dans le document US 5634246.

Enfin le document US 1645714 montre un système d'attache de type émerillon selon les caractéristiques du préambule de la revendication 1.

### Objet de l'invention

L'objet de l'invention consiste à réaliser un émerillon ouvrable à encombrement réduit, et ayant un système de fermeture résistant et fiable tout en étant compatible avec différents usages et appareillages de raccordement.

Le dispositif d'attache selon l'invention comprend est
- une paire d'anneaux pouvant tourner librement l'un par rapport à l'autre autour d'un axe de rotation formé par un pivot central, au moins l'un des anneaux étant conformé en crochet délimitant un espace d'accès latéral,
- un élément de fermeture est apte à fermer ledit espace en réalisant la reprise partielle des efforts de traction, ledit élément de fermeture comprenant une vis de fixation démontable, laquelle est décalée latéralement par rapport à l'axe de rotation, et s'étendant sensiblement parallèlement au pivot central dans l'état de fermeture,
- l'embase creuse de l'un des anneaux comportant une surface de positionnement annulaire, coopérant avec un épaulement de l'autre anneau en laissant subsister un jeu prédéterminé pour la libre rotation des anneaux autour du pivot central,
et est caractérisé en ce que:
l'élément de fermeture est composé d'une entretoise traversée par la vis de fixation,
ladite entretoise prenant appui sur deux faces opposées du crochet
Le fond du crochet présente préférentiellement une forme arrondie agencée de telle sorte que l'application d'une charge de traction s'effectue suivant l'axe de rotation de l'émerillon.

Un tel dispositif présente un encombrement compact avec un système de fermeture résistant et visible en permanence, lui conférant une fiabilité élevée.

Selon une caractéristique de l'invention, l'embase de l'anneau est dotée d'un logement de réception d'un roulement, lequel est intercalé entre la tête du pivot et l'épaulement de l'autre anneau.
Les éléments de fermeture peuvent bien entendu être constitués par de simples boulons s'étendant sensiblement parallèlement au pivot central. Les faces d'extrémités du crochet sont avantageusement parallèles, et s'étendent sensiblement orthogonalement à l'axe de rotation.

Selon un premier mode de réalisation, les deux anneaux sont ouvrables au moyen de deux vis ayant des sens de vissage ou dévissage opposés dans la direction axiale de l'axe de rotation.
Selon un deuxième mode de réalisation, un seul des anneaux est ouvrable, l'autre étant dépourvu d'élément de fermeture.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue en perspective du dispositif d'attache à émerillon selon l'invention avec deux anneaux ouvrables ;
- la figure 2 montre une vue éclatée du dispositif de la figure 1 ;
- la figure 3 représente une vue en coupe de la figure 1 ;
- la figure 4 illustre une vue éclatée en perspective de l'anneau supérieur après retrait de l'entretoise hors de l'espace latéral;
- les figures 5 et 6 sont des vues similaires des figures 1 et 2 d'une variante de réalisation avec un seul anneau ouvrable.

### Description détaillée de l'invention

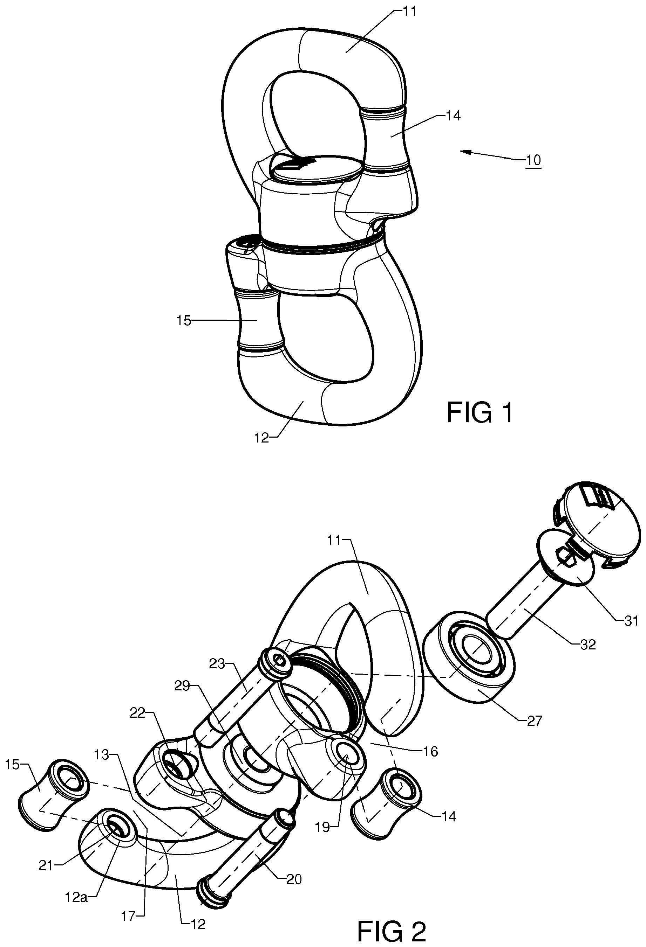

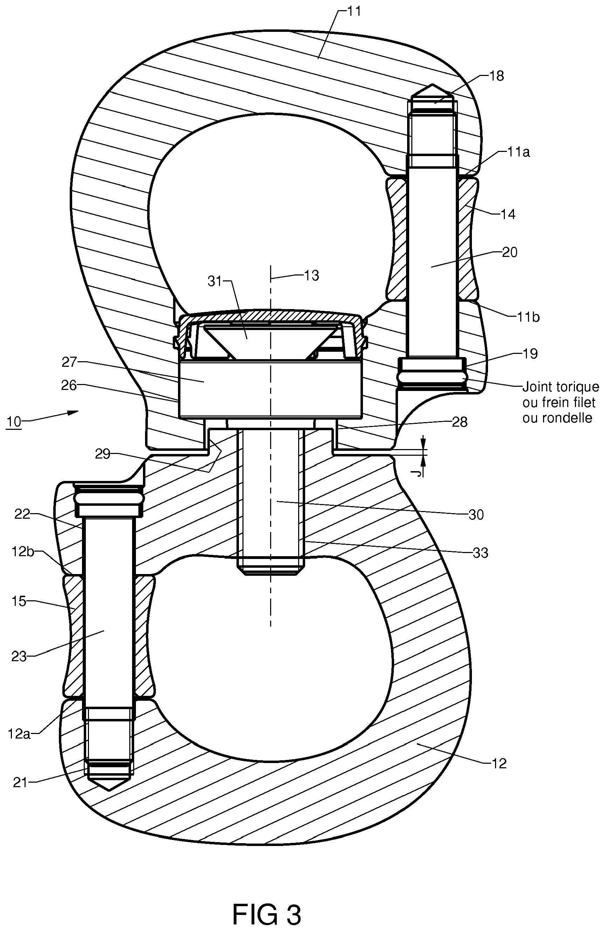

Sur les figures 1 à 3, un dispositif d'attache à émerillon, désigné par le repère général 10, comporte une paire d'anneaux 11, 12 aptes à tourner librement l'un par rapport à l'autre autour d'un axe de rotation 13 commun. Les deux anneaux 11, 12 sont réalisés à titre d'exemple en alliage d'aluminium, ou en tout autre matériau métallique.

Chaque anneau 11, 12 est composé d'un crochet ouvert en forme de C, et d'un élément de fermeture destiné à fermer l'espace 16, 17 latéral du crochet correspondant. Chaque élément de fermeture comprend à titre d'exemple, une entretoise 14, 15 traversée par une vis de fixation 20, 23. L'espace 16, 17 est agencé entre les deux faces d'extrémités 11a, 11b ; 12a, 12b planes et parallèles du crochet, pour permettre l'insertion d'une boucle de sangle ou corde à l'intérieur de l'anneau 11, 12 après démontage de l'élément de fermeture correspondant.

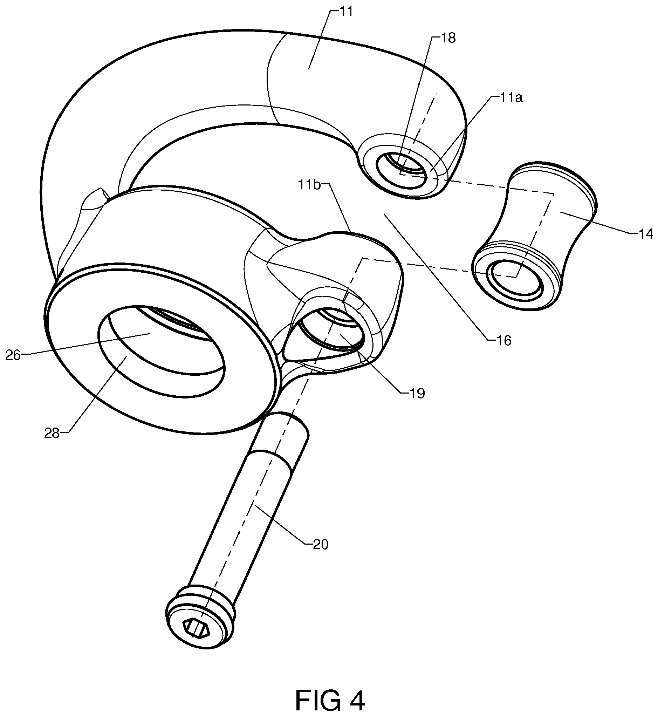

Sur la figure 4, l'une des faces 11a de l'anneau supérieur 11 est dotée d'un premier trou 18 borgne fileté, et l'autre face 11b du même anneau 11 est pourvue d'un deuxième trou 19 traversant et non fileté. Les deux trous 18, 19 sont alignés sensiblement selon une direction parallèle à l'axe de rotation 13 pour permettre le passage d'une vis 20.

Tout cet ensemble peut être incliné par rapport à l'axe de rotation 13 pour améliorer la forme ou l'encombrement de l'émerillon.

Il en est de même pour l'autre anneau inférieur 12 qui est inversé par rapport au premier anneau 11. La face 12a est pourvue d'un troisième trou 21 borgne fileté, et l'autre face 12b est équipée d'un quatrième trou 22 traversant et non fileté. Les deux trous 21, 22 sont alignés sensiblement selon une direction parallèle à l'axe 13 pour permettre le passage d'une autre vis 23.

L'entretoise 14, 15 de chaque élément de fermeture possède une forme sensiblement cylindrique, et est percée axialement par un alésage 24, 25 pour le passage des vis 20, 23. La longueur axiale de l'entretoise correspond à l'intervalle de l'espace latéral 16, 17, et le diamètre de l'alésage 24, 25 est légèrement supérieur à celui des vis 20, 23.

L'embase de l'anneau 11 supérieur comporte un logement 26 annulaire destiné à la mise en place d'un roulement 27 à billes ou rouleaux. L'extrémité inférieure de l'embase est ouverte en délimitant une surface de positionnement 28 annulaire.

Le sommet de l'anneau 12 inférieur est équipé d'un épaulement 29 qui s'ajuste dans la surface de positionnement 28 annulaire pour le centrage axial des deux anneaux 11, 12. Un pivot 30 est utilisé pour constituer l'axe de rotation 13 libre des deux anneaux 11, 12. La tête 31 du pivot 30 prend appui sur la cage du roulement 27, et son fût 32 traverse le roulement 27, et est solidarisé dans un orifice 33 de l'anneau 12. Le montage du roulement 27 et du pivot 30 est configuré pour laisse subsister un jeu J de faible épaisseur entre l'embase et le sommet des deux anneaux 11, 12 pour en autoriser un mouvement de rotation dans les deux sens.

Préférentiellement, les deux entretoises des éléments de fermeture 14, 15 sont en matériau métallique, et sont agencées pour éviter tout point d'accrochage dangereux à l'intérieur des anneaux 11, 12. Elles peuvent avoir un revêtement de coloration différente de celle du crochet. Une seule vis 20, 23 est nécessaire pour fermer chaque anneau 11, 12, et l'entretoise correspondante reste parfaitement visible depuis l'extérieur en position assemblée. La boucle de sangle ou corde reste emprisonnée dans l'anneau 11, 12 avec une sécurité totale, tout en restant mobile angulairement grâce à des surfaces internes arrondies ou continues.

Lorsque l'émerillon est mis sous tension, ces boucles de sangle ou corde viennent automatiquement se positionner dans le creux arrondi du crochet 11, 12 coïncidant avec l'axe de rotation 13 de l'émerillon.

Pour ouvrir un des anneaux 11, 12, il suffit de dévisser la vis 20, 23 correspondante au moyen d'une clé (non représentée), et de retirer l'entretoise 14, 15 pour libérer l'espace latéral 16, 17. Il est alors possible de remplacer une boucle de corde par une autre, ou par tout autre organe d'attache.

Les deux vis 20, 23 s'étendent sensiblement parallèlement à l'axe de rotation 13 du pivot 30, et se montent en sens inverse l'une de l'autre pour la fixation des deux éléments de fermeture 14, 15.

Il est clair que les vis 20, 23 et entretoises 14, 15 peuvent être remplacées par des boulons ou par tout autre organe de fixation démontable destiné à la reprise partielle des efforts de traction. Les vis 20, 23 peuvent aussi être inclinées par rapport à l'axe de rotation 13 sans sortir du cadre de l'invention.

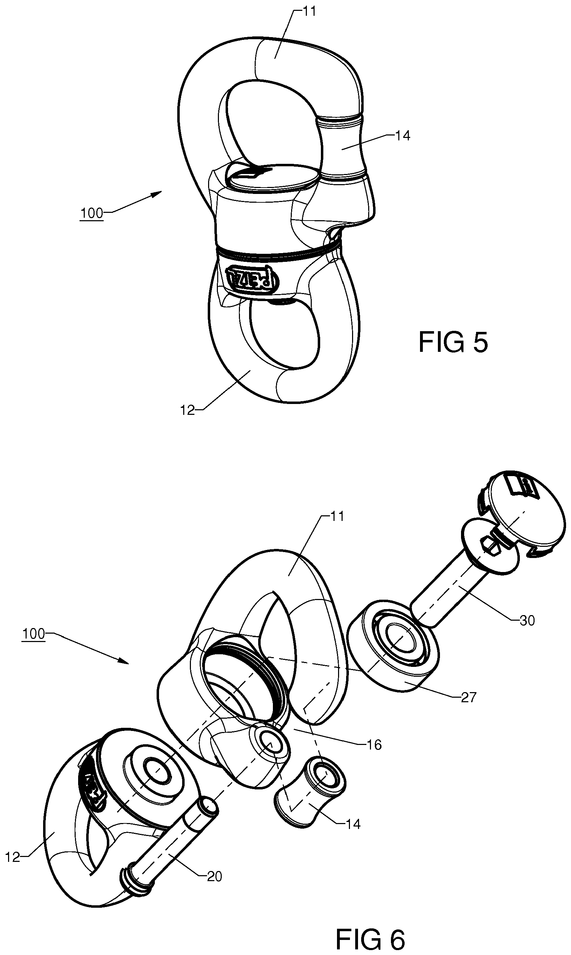

Dans la variante de réalisation des figures 5 et 6, seul l'un des anneaux 11 est ouvrable. Le dispositif d'attache à émerillon 100 est similaire à celui 10 des figures précédentes, mais l'anneau 12 est totalement fermé en étant dépourvu de l'espace latéral 17 et de son entretoise. Les mêmes numéros de repères seront utilisés pour désigner des pièces identiques ou similaires. L'anneau 11 est identique à celui décrit précédemment.

## Revendications

1. Dispositif d'attache à émerillon (10, 100) comprenant une paire d'anneaux (11, 12) pouvant tourner librement l'un par rapport à l'autre autour d'un axe de rotation (13) formé par un pivot (30) central, au moins l'un des anneaux étant conformé en crochet délimitant un espace (16, 17) d'accès latéral,
le dispositif (10, 100) comprenant en outre :
- un élément de fermeture apte à fermer ledit espace en réalisant la reprise partielle des efforts de traction, ledit élément de fermeture comprenant une vis de fixation (20, 23) démontable, laquelle est décalée latéralement par rapport à l'axe de rotation, et s'étendant sensiblement parallèlement au pivot (30) central dans l'état de fermeture,
- l'embase creuse de l'un des anneaux (11) comportant une surface de positionnement (28) annulaire, coopérant avec un épaulement (29) de l'autre anneau (12) en laissant subsister un jeu (J) prédéterminé pour la libre rotation des anneaux (11, 12) autour du pivot (30) central,
**caractérisé en ce que** l'élément de fermeture comporte une entretoise (14, 15) traversée par la vis de fixation (20, 23), ladite entretoise prenant appui sur deux faces opposées du crochet.

2. Dispositif d'attache à émerillon selon la revendication 1, **caractérisé en ce que** les faces d'extrémités (11a, 11b ; 12a, 12b) du crochet sont parallèles, et s'étendent orthogonalement à l'axe de rotation (13).

3. Dispositif d'attache à émerillon (10) selon la revendication 1, **caractérisé en ce que** les deux anneaux (11, 12) sont ouvrables au moyen de deux vis (20, 23) ayant des sens de vissage ou dévissage opposés dans la direction axiale de l'axe de rotation (13).

4. Dispositif d'attache à émerillon selon la revendications 1, **caractérisé en ce que** l'embase de l'anneau (11) est dotée d'un logement (26) de réception d'un roulement (27), lequel est intercalé entre la tête (31) du pivot (30) et l'épaulement (29) de l'autre anneau (12).

## Patentansprüche

1. Anschlussvorrichtung (10, 100) mit einem Drehgelenk, umfassend ein Paar von Ringen (11, 12), welche sich frei in Bezug auf einander um eine Drehachse (13) drehen können, die von einem zentralen Schwenkzapfen (30) gebildet wird, wobei mindestens einer der Ringe als Haken ausgebildet ist, der einen lateralen Zugangsraum (16, 17) begrenzt, wobei die Vorrichtung (10, 100) außerdem umfasst:
- ein Verschlusselement, das dafür geeignet ist, um den genannten Raum zu verschließen, indem die teilweise Wiederaufnahme der Zugkräfte vorgenommen wird, wobei das genannte Verschlusselement eine lösbare Befestigungsschraube (20, 23) umfasst, die lateral in Bezug auf die Drehachse versetzt ist und sich im Wesentlichen parallel zum zentralen Schwenkzapfen (30) im geschlossenen Zustand erstreckt,
- die hohle Basis des einen der Ringe (11), umfassend eine ringförmige Positionierungsfläche (28), die mit einer Schulter (29) des anderen Rings (12) zusammenwirkt, indem ein vorherbestimmtes Spiel (J) für die freie Drehung der Ringe (11, 12) um den zentralen Schwenkzapfen (30) bestehen gelassen wird,
**dadurch gekennzeichnet, dass** das Verschlusselement ein Zwischenstück (14, 15) umfasst, das von der Befestigungsschraube (20, 23) durchquert wird, wobei das genannte Zwischenstück an zwei gegenüberliegenden Flächen des Hakens anliegt.

2. Anschlussvorrichtung mit einem Drehgelenk nach Anspruch 1, **dadurch gekennzeichnet, dass** die Endflächen (11a, 11b; 12a, 12b) des Hakens parallel sind und sich orthogonal zur Drehachse (13) erstrecken.

3. Anschlussvorrichtung (10) mit einem Drehgelenk nach Anspruch 1, **dadurch gekennzeichnet, dass** die beiden Ringe (11, 12) mit zwei Schrauben (20, 23) geöffnet werden können, die eine Einschraub- oder Aufschraubrichtung aufweisen, welche zur axialen Richtung der Drehachse (13) entgegengesetzt ist.

4. Anschlussvorrichtung mit einem Drehgelenk nach Anspruch 1, **dadurch gekennzeichnet, dass** die Basis des Rings (11) mit einem Sitz (26) zur Aufnahme eines Lagers (27) versehen ist, das zwischen dem Kopf (31) des Schwenkzapfens (30) und der Schulter (29) des anderen Rings (12) angeordnet ist.

## Claims

1. A swivel attachment device (10, 100) comprising a pair of rings (11, 12) able to rotate freely with respect to one another around an axis of rotation (13) formed by a central pivot-pin (30), at least one of the rings being in the form of a hook delineating a lateral access space (16, 17), the device (10, 100) further comprising:
- a closing part designed to close said space performing partial take-up of the tractive forces, said closing part comprising a removable fixing screw (20, 23), which is laterally spaced apart from the axis of rotation, and extending in a substantially parallel direction to the central pivot-pin (30) in the closed state,
- the hollow base of one of the rings (11) comprising an annular positioning surface (28) cooperating with a rim (29) of the other ring (12) leaving a predefined clearance (J) for free rotation of the rings (11, 12) around the central pivot-pin (30).
**characterised in that** the closing part includes a spacer (14, 15) through which said fixing screw (20, 23) passes, said spacer pressing on two opposite surfaces of the hook.

2. The swivel attachment device according to claim 1, **characterised in that** the end surfaces (11a, 11b; 12a, 12b) of the hook are parallel and extend orthogonally to the axis of rotation (13).

3. The swivel attachment device (10) according to claim 1, **characterised in that** the two rings (11, 12) are openable by means of two screws (20, 23) having opposite tightening and loosening directions in the axial direction of the axis of rotation (13).

4. The swivel attachment device according to claim 1, **characterised in that** the base of the ring (11) is provided with a housing (26) for receipt of a bearing (27), which is inserted between the head (31) of the pivot-pin (30) and the rim (29) of the other ring (12).
